**Europäisches Patentamt**

**European Patent Office**

**Office européen des brevets**

(19)

(11) Publication number: **0 077 378**

**B1**

(12) **EUROPEAN PATENT SPECIFICATION**

(45) Date of publication of patent specification: **03.12.86**

(21) Application number: **82901681.5**

(22) Date of filing: **19.04.82**

(86) International application number:
**PCT/US82/00485**

(87) International publication number:
**WO 82/03903 11.11.82 Gazette 82/27**

(51) Int. Cl.⁴: **F 16 M 13/00, G 01 C 21/18 //
H01Q1/18**

(54) **MECHANICALLY STABILIZED PLATFORM SYSTEM.**

(30) Priority: **28.04.81 US 258459**

(43) Date of publication of application:
**27.04.83 Bulletin 83/17**

(45) Publication of the grant of the patent:
**03.12.86 Bulletin 86/49**

(84) Designated Contracting States:
**DE FR GB NL**

(56) References cited:
**EP-A-0 026 626
CH-B- 440 737
FR-A- 455 120
GB-A- 565
GB-A- 460 244
GB-A- 612 832
GB-A- 821 138
US-A-2 199 294
US-A-2 302 894
US-A-2 539 772
US-A-3 163 039
US-A-3 296 621
US-A-3 518 676
US-A-3 614 895
US-A-4 020 491**

(73) Proprietor: **MATTHEWS, Robert J.
4510 Alhambra Avenue
Martinez, CA 94553 (US)**

(72) Inventor: **MATTHEWS, Robert J.
4510 Alhambra Avenue
Martinez, CA 94553 (US)**

(74) Representative: **Haggart, John Pawson et al
Page, White & Farrer 5 Plough Place New Fetter
Lane
London EC4A 1HY (GB)**

Courier Press, Leamington Spa, England.

## Description

Technical Field

This invention relates generally to gyroscopically stabilized platforms, and more specifically to combination-element gyro stabilized platform systems, and specifically to statically balanced, mechanically stabilized platform systems, such as might be used to support antennas in mobile applications.

A mechanically stabilized platform system is one in which a gyroscopic torsional impulse absorption system alone is used to absorb torsional impulses caused by vehicle motions. As used herein a gyroscopic torsional impulse absorption system is defined as comprising gyroscopic apparatus including a pair of gyroscopic rotors, means for independently mounting each of said rotors for rotation about one axis and for precession about another axis at an angle to said one axis, said axes of each rotor being respectively parallel and perpendicular to said axes of said other rotor, and centering means operatively connected to each of said axes mounting means.

Background Art

Mechanically stabilized platform systems can provide a stable mounting platform for devices such as cameras, directional antennas, and sensing and recording instruments when these devices are used on ships, aircraft, and land vehicles. However, direct mechanically stabilized platforms have had only limited use in the past in such applications because they suffered from three major shortcomings: (1) they were relatively inaccurate, (2) they had large and awkward configurations, and (3) they were susceptible to destabilization from yaw/turning and other azimuth motions combined with roll or pitch motions.

Regarding the first problem of poor accuracy, numerous prior art patents taught that the platform system should be pendulous so as to orient the platform to the vertical. That result was obtained, but the pendular characteristic also caused the platform to be responsive to horizontal accelerations. Pendulous platforms having this undesirable characteristic are described by Patents US—A—1,645,079 — Titterington, US—A—1,083,370 — Luyken, US—A—1,186,856 and US—A—1,236,993 — Sperry, US—A—1,999,897 — Fieux, US—A—2,199,294 — Seligmann.

In particular US—A—4,020,491 — Bieser et al, describes a mechanically stabilized platform system for mounting on a supporting structure in accordance with the prior art portions of independent claims 1, 8 and 15.

Making the platform system pendulous as taught by these patents created the interesting, and undesirable, paradox that the pendular effect used to provide the system with a long-term reference orientation was responsible for the largest short-term disturbances to platform orientation. These short-term disturbances, although attenuated by gyroscopic action, constitute one of the two major effects which limit the accuracy of such previously known mechanically stabilized platform systems of the pendulous type. The other major accuracy-limiting effect is discussed later.

The problems of pendulosity were avoided by other systems, such as those disclosed in Patents US—A—1,032,022 — Petravic, US—A—1,573,028 — Bates, and US—A—2,811,042 — Kenyon by making such systems statically balanced. However, each of these systems require periodic manual adjustment to establish a desired reference orientation. Still other patents including US—A—1,906,719 — Richter, US—A—1,324,477 — Tanner, and US—A—3,742,770 — Flannelly describe statically balanced gyroscopic systems which are oriented with respect to their support frame by mechanical springs. Again, the pendulosity problems were avoided, but in each of these systems the orientation of the stabilized element changed in correspondence with long-term changes in support frame orientation.

US—A—2,537,772 — Dawson differs from the above noted patents in that it relies upon some unspecified "self-erecting" characteristic of a gyroscope in a statically balanced position-stabilizing device to eliminate the need for establishing any particular reference direction. The existence of any such self-erecting characteristic is contrary to the most fundamental property of a gyroscope, namely that when there is no moment of force acting upon the gyroscope, the axis of rotation maintains a fixed direction in inertial space.

US—A—4,193,308 — Stuhler, et al describes a system which is statically balanced as a whole but in which the gyro assemblies are made individually pendulous. Regarding sensitivity to horizontal accelerations the result of this arrangement is the same as if the platform were made pendulous and disturbing horizontal accelerations were applied at right angles to those acting on the actual system.

The second major problem associated with the prior art, namely large and awkward configuration, resulted from constructing the platform system including the operating equipment as a single integrated assembly. Such systems typically were structurally inefficient and required large amounts of dead counterweight. As a result they were characterized by low structural resonant frequencies, which resulted in poor tolerance to vibrations and consequent high vibration stresses on platform equipment. While US—A—2,924,824 — Lanctot proposed to solve this problem in a servo-stabilized system, it requires a large, cylindrical, clear volume of space for push-rod assemblies as they are rotated together with a scanning antenna about a requisite common axis in an integrated assembly. US—A—1,621,815 — Schueller proposes an arrangement which separates the overall system into two interconnected assemblies, but its embodiments are such that yaw and turning motions will be superimposed on both the roll and pitch axes of the "stabilized" platform.

The third major problem area in the prior art, destabilization from qaw/turning motions combined with roll or pitch motions, resulted from such motions being converted into platform disturbing torques by the gyros whenever the gyro spin axes were not exactly vertical. If the gyro's spin axis is exactly vertical, the rotations of the gyro support frame about that vertical axis, as in yawing or turning, will have no effect. However, if the gyro spin axis has precessed some angle away from vertical as a result of reacting to a disturbing torque about the roll or pitch axis, then a component of the gyro's angular momentum will exist in the horizontal plane. If there are no motions in the horizontal plane then nothing will happen, but if the horizontal rotations do occur they will be coupled into the platform by the gyro's horizontal component of momentum and will tend to mislevel the platform. Significant errors in platform orientation can occur, and in extreme cases the platform will become completely destabilized. US—A—2,199,294 — Seligmann recognized and solved the problem of combined motions by stabilizing the entire platform system about a vertical axis relative to the meridian. While technically valid, this arrangement has the serious practical disadvantage of requiring the use of slip-rings or rotary joints on all connections to equipment mounted on the stabilizing platform. US—A—4,020,491 — Bieser, et al describes embodiments comparable to those of US—A—2,199,294 — Seligmann regarding turntable mounting of the entire system, and suggests that structural means be employed to lock the gyro pivot axis during rapid turning maneuvers to minimize torquing errors. Such locking has the undesirable effect of disabling the stabilization system during maneuvers when it might be needed most. US—A—4,193,308 — Stuhler, et al describes a fluid dashpot caging system for use in stabilized platforms in which the entire system may be rotatably mounted on a pedestal to permit azimuth orientations of the platform. Such azimuth orientation motions, if occurring simultaneously with roll or pitch motions, would of course cause the above-described torquing errors.

The invention as claimed in independent claims 1, 5 and 15 is intended to remedy the drawbacks of the prior art. Particular embodiments of the invention are set out in the dependent claims.

The differences between previously known systems which are rigidly pendulous and a system constructed in accordance with the present invention which may be statically balanced and is non-rigidly coupled to an auxiliary pendulum, heretofore overlooked by all of the prior art, are fundamental to the unforeseeable improvements provided by the invention. In rigidly pendulous systems of the prior art, the dynamic characteristics are essentially immutable, whereas almost any desired set of dynamic characteristics can be designated and built into systems constructed in accordance with the present invention. To illustrate, if a rigidly pendulous system of given weight/inertia is to have a given torque gradient-toward-vertical then there exists only one value for the pendular length. But this pendular length-pendular weight/inertia combination will have a characteristic natural period of oscillation over which the designer has no control. Torque gradient as used herein is defined as having the dimensions of L . M per degree, or other equivalent units. By contrast, in a statically balanced-plus-auxiliary pendulum system a given torque gradient-toward-vertical can be obtained with an infinite variety of pendulum weight/pendulum length combinations. This makes possible a combination which produces any pre-selected value for the period of natural oscillation. This has important consequences for practical stabilization systems because such systems should have natural oscillation periods which will not be excited in their operation environment. For example, ship vibrations fall into two separate bands in the frequency spectrum; those with periods in the range of about 0.02 to 0.25 seconds caused by the propulsion system and other machinery, and those in the range of about 4 to 100 seconds caused by gross ship and wave motions. Between these two bands there is a "window" in the frequency spectrum, from about 0.25 to 4 Hz, which is almost free of vibrations. The auxiliary pendulum with its suspension and coupling in the present invention is designed to have a natural period which falls within this band so that it is left essentially free of shipboard excitations. In contrast, rigidly pendulous systems as taught in the prior art characteristically have natural periods in the range of 10 to 30 seconds which make them susceptible to excitation, and hence orientation inaccuracies, from gross ship and wave motions. This is, in fact, the second major effect referred to above which limits the accuracy of pendulous mechanically stabilized platform systems as taught in the prior art.

It should be noted that a statically balanced stabilized platform system does not require the continuous application of reference orienting means; such means need be applied only long enough and frequently enough to prevent the accumulation of drift and wandering errors. The present invention allows for reducing the coupling effect between platform and auxiliary pendulum under conditions when the pendulum is subject to orientation errors, such as from horizontal accelerations induced by ship motions. Such de-coupling is not possible in rigidly-pendulous platform systems. This feature in the present invention is used in conjunction with the other features described herein and accordingly allows construction of much more accurate mechanically stabilized platform systems than were heretofore possible.

The phrase "statically compositely balanced", or simply "compositely balanced", as used above refers to the condition in a system wherein the pivotal members will remain at any initial orientation in the presence of an accelerating field, such as gravity. For an assembly pivotally mounted to a supporting structure about a single axis this condition will exist if the center of gravity of the system lies on the pivotal axis. For a system composed of two interconnected rigid assemblies, each of which is separately supported on its own pivotal axis, this condition will exist if any unbalance of one assembly about its pivotal axis is compensated by an equal but opposite unbalance of the other assembly about its pivotal axis. Arranging for the system to be statically compositely balanced makes it insensitive to all accelerations. The advantages therefrom have been noted above.

In the present invention the long-term reference orientation established by the auxiliary pendulum is transferred to the stable platform by non-rigid coupling means therebetween. The components used for this coupling can be designed to provide many kinds of torque restoration functions through selection and design of combinations of various devices which produce forces or torques, such as linear springs, non-linear springs, dashpots, magnets and other magnetic devices, and various other pneumatic, hydraulic, electric and mechanical devices. Inclusion of viscous damping or other energy-absorbing mechanisms in the torque restoration function for the purpose of damping out platform oscillations is desirable.

An example of a desirable torque restoration function is one which creates an increasing torque with increasing angular displacements for small displacements, and which maintains that torque at a constant value for all larger displacements, and which includes a damping factor. Another example of a desirable torque restoration function is one which provides strong coupling during periods when the pendulum has small vertical errors, and which provides only weak or even no coupling at all when the pendulum has large vertical errors.

The stabilization system may be constructed as two separate but inter-connected assemblies, each part of which is optimally designed for its particular functions. The two assemblies comprise the stabilizing assembly, and the stabilized platform including its operating equipment. These two assemblies are inter-connected with any variety of position or motion transmitting means such that the stabilized platform always has the same angular orientation with respect to a reference plane as does the stabilizing assembly.

Significant improvements in size, weight, and stiffness characteristics result from this feature of the present invention. It also allows stable platforms not originally designed to direct mechanical stabilization to be economically converted to that type. A further advantage of this feature is that it permits the stabilizing assembly to be placed at a location where its operating environment is less severe than that imposed on the operating equipment which it stabilizes. For example, the assembly could be mounted below deck rather than on a mast exposed to the elements. Still another advantage of this feature is that larger disturbing impulse absorbing capacity can be obtained from a given amount of gyro momentum as a result of having greater spacial design freedom, hence allowing larger gyro precession axis operating ranges.

The gyro assembly support frame can be rotatably mounted on its own independent azimuth bearings within the stabilizing assembly. This arrangement minimizes the problems associated with yaw/turning combined with roll or pitch motions described above because the gyro assemblies experience only slight azimuth motions with respect to inertial space. Hence as far as the gyro assembly support frame is concerned yaw or turning motions effectively do not occur. An observer could note relative motion occurring between the gyro support frame and the ship but it would in fact represent the support frame remaining static in inertial space while the ship turned under it.

For a fuller understanding of the principles which apply to this invention and of the descriptions which follow, it will be noted that a mechanically stabilized platform system operates on the equivalency and convertibility of torsional impulse and angular momentum. Torsional impulses which tend to disturb the platform are resisted by changes in the angular momentum of the system. These changes appear in the form of gyro spin axis reorientation, usually referred to as precession. When a disturbing torque occurs the gyro first goes through a transient oscillating motion about its precession axis, and then begins to rotate about that axis at a constant rate. In the process a small angular offset occurs to the platform. Precession will continue until either the torque is removed, or the gyro reaches a precession angular limit, whichever occurs first. When the disturbing torque is removed precession ceases and the platform's angular offset is corrected by the reference orientation means employed. These effects can be described and analyzed by means of the general equations for rotation of a body about its mass center.

Brief Description of the Drawings

Figure 1 is a partially broken away and sectioned side elevational view of one embodiment of the present invention. The upper portion of Figure 1 represents the stabilized platform of such a system and the lower portion represents the stabilizing assembly portion;

Figure 2 is a horizontal section taken along line 2—2 in Figure 1 showing the right angled gimbal mounting detail;

Figure 3 is a horizontal section taken along line 3—3 in Figure 1 showing the right angled gimbal and gyro mounting detail;

Figure 4 is a partially broken away and sectioned side elevation view of of a second embodiment of a mechanically stabilized platform system in which there is a single stabilized pivotal axis;

Figure 5 is a horizontal section taken along line 4—4 of Figure 4 showing the gyro mounting gimbal;

Figure 6 illustrates a portion of a third embodiment in which a single coil spring is used as part of the system's reference orientation means;

Figure 7 is a horizontal section taken along line 7—7 in Figure 6;

Figure 8 is a partially broken away and sectioned side elevation view of another embodiment in which the equipment being stabilized is mounted directly on the stabilization assembly;

Figure 9 is a partial front elevation of the embodiment shown in Figure 8;

Figure 10 is a partially broken away and sectioned detail of one of the auxiliary pendulum non-rigid support members shown in Figures 8 and 9; and

Figure 11 is a partially broken away and sectioned partial view of another embodiment wherein a reference orientation for the stabilized portion of the system is established by a non-rigidly coupled auxiliary pendulum acting in combination with a single coil spring mounted on the support structure.

Description of the Preferred Embodiments

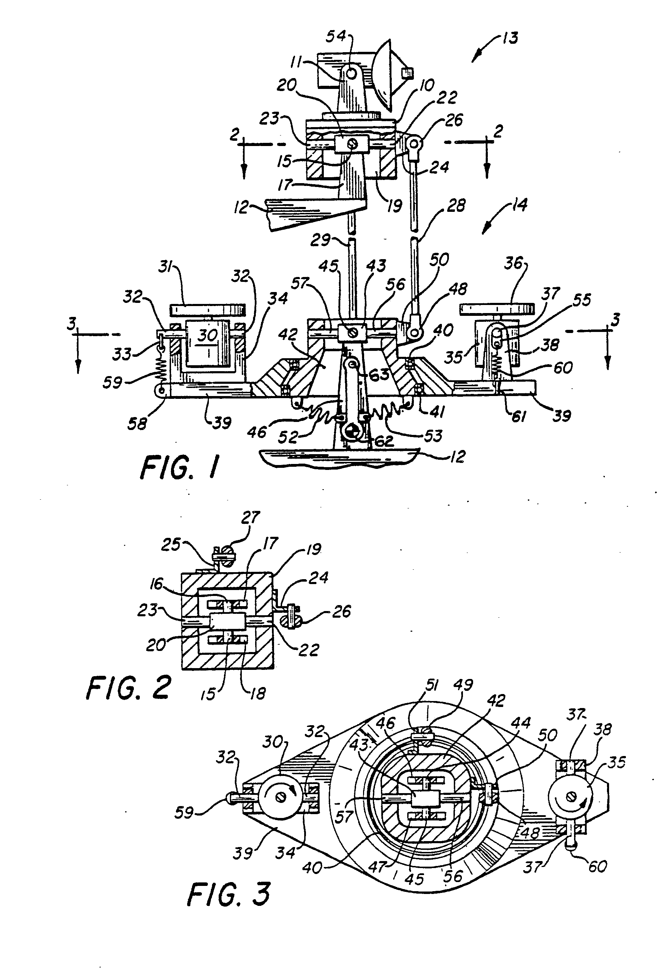

Referring first to Figure 1, it can be seen that platform structure 10 of equipment platform 13 supports operating equipment 11 such as a directional microwave antenna or radar apparatus. The equipment platform is defined herein as including all operating equipment mounted thereon. Operating equipment 11 is rotatably mounted on platform structure 10 and typically is slaved to follow the ship's gyro compass. Platform structure 10 itself is supported by the upper gimbal ring 19, which is pivotally mounted on the upper spider spindles 22 and 23. Referring now to Figure 2, upper spider 20 is pivotally mounted on upper support spindles 15 and 16, which are supported by upper trunnions 17 and 18, which in turn are attached to the support structure 12. The axes of spindles 22 and 23 are shown to be co-linear and perpendicular to the co-linear axes of spindles 15 and 16. Both of these co-linear axes lie in the same plane.

Gimbal brackets 24 and 25 attached to upper gimbal ring 19 support pivotally-mounted upper ball joints 26 and 27 with their pivotal centers lying respectively on spindle axes 22 and 23, and 15 and 16. Push-rods 28 and 29 are attached respectively to ball joints 26 and 27 at one end, and as shown in Figure 3, to lower ball joints 48 and 49 at their other end in order to connect the gimbal ring 19 to a gyroscopically controlled stabilizing assembly which is indicated by the reference 14 in Figure 1. Gimbal clips 50 and 51 support lower ball joints 48 and 49 and are themselves attached to lower gimbal ring 42 which is supported on lower spider spindles 56 and 57. Lower spider 43 supports spindles 56 and 57 and itself is pivotally supported by lower support spindles 44 and 45 which are supported by lower trunnions 46 and 47. The pivotal axis represented by spindles 56 and 57 is perpendicular to the pivotal axis represented by spindles 44 and 45. Both of these axes lie in the same plane.

Lower trunnions 46 and 47 are mounted at another place on support structure 12 from that which supports upper trunnions 17 and 18.

The axes represented by lower support spindles 44 and 45, and 56 and 57, are parallel respectively to the axes represented by upper support spindles 15 and 16, and 22 and 23. Azimuth bearings 40 and 41 are supported by lower gimbal ring 42 and themselves rotationally support gyro azimuth frame 39 on which are mounted gyro mounting frames 34 and 38. Gyro motor 30 and rotor 31 are pivotally supported on gyro pivot spindles 32 in gyro mounting frame 34. Gyro motor 35 and rotor 36 are pivotally supported on pivot spindles 37 in the gyro mounting frame 38. The pivot axis of gyro motor 30 is perpendicular to the pivotal axis of gyro motor 35. Although pivot spindles 32 are shown parallel to pivot spindles 56 and 57, these axes need not necessarily be oriented. Gyro motor with rotor 31 is statically balanced about pivot spindles 32; gyro motor 35 with rotor 36 is also statically balanced about pivot spindles 37.

Gyro spring 59 is connected to eccentric extension 33 of spindle 32 at one end, and to spring clip 58 at its other end. Spring 60 is similarly connected between spindle 37 eccentric extension 55 and spring clip 61. Stabilized platform assembly 13 is statically balanced about the axis of spindles 15 and 16 and also about the axis of spindles 22 and 23. Stabilizing assembly 14 including push-rods 28 and 29 and ball joints 26, 48, 27, 49, is statically balanced about the axis of spindles 44 and 45 and also about the axis of the spindles 56 and 57. Gimbal springs 52 and 53 are connected between lower gimbal ring 42 and pendulum 62 so as to orient lower gimbal ring 42 with respect to gravity about the axis of spindles 44 and 45. The pendulum 62 is suspended from the supporting structure 12 by a pivot 63. Two other springs, not shown, are similarly connected to a second pendulum, not shown, to orient gimbal ring 42 about the axis of spindles 56 and 57 with respect to gravity.

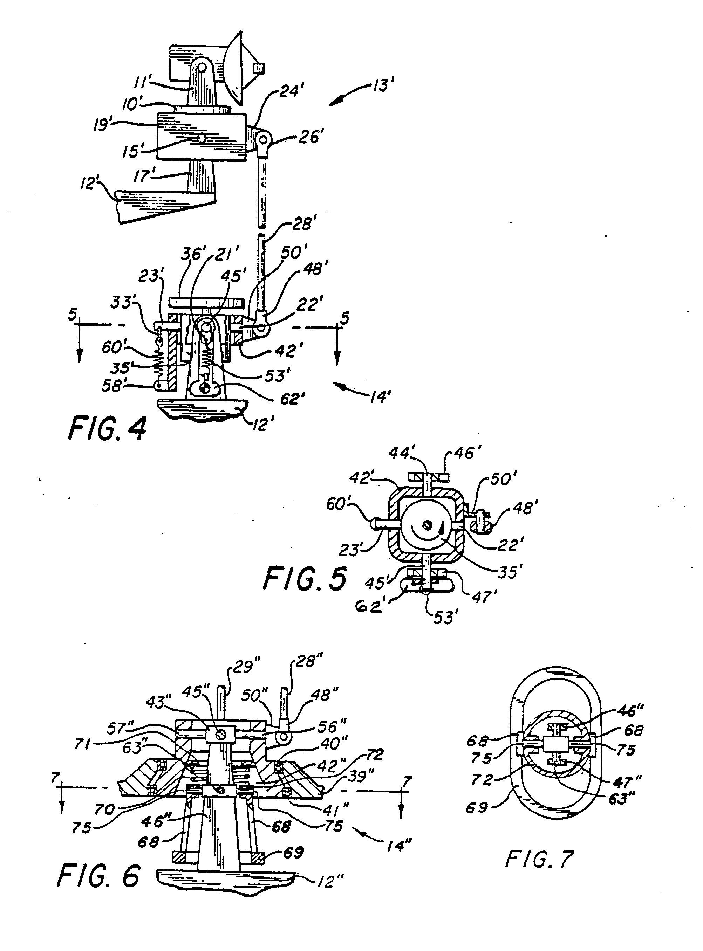

In Figure 4, an embodiment of this invention is shown in which a single-axis stabilized platform is employed. Pivot axis spindles 15' are rotationally supported in trunnions 17' mounted on support structure 12'. Gyro motor 35' is statically balanced with respect to its support spindles 22' and 23' which are rotationally mounted in lower gimbal ring 42'. Ring 42' is supported on spindles 44' and 45' which in turn are supported in lower trunnions 46' and 47' as shown in Figure 5. Gyro pivot spring 60' is connected to eccentric extension 33' of spindle 23' at one end and at its other end to spring clip 58' which is attached to lower gimbal ring 42'. Gimbal springs 53', one of which is shown, are connected between eccentric extension 21' of spindle 45' and tabs on pendulum 62'. The stabilized platform assembly 13' and the stabilizing assembly 14' including push-rod 28' and ball joints 26' and 48' are statically balanced about their respective support spindles 15' and 44' and 45', either individually or compositely.

In Figures 6 and 7, the trunnions 46″ and 47″ carry gimbal spindles 63″ which pivotally support inner gimbal 73 which in turn pivotally supports outer gimbal ring 72 on spindles 75. Pendulum ring 69 is rigidly connected to outer gimbal ring 72 by means of struts 68. This overall arrangement provides pendulum ring 69 with pivotal freedom about two mutually perpendicular axes.

Coil spring 70 rests in a groove in the upper surface of outer gimbal ring 72 at its lower end, and in a grooved ring 71 which is attached to lower gimbal ring 42″ at its upper end. Excluding pendulum ring 69 with struts 68 and coil spring 70, stabilization assembly 14″ is statically balanced about both orthogonal axes of spider 43″. Thus the composite assembly comprised of stabilization assembly 14″ and the stabilized platform assembly 13″, not shown, including push-rods 28″ and 29″, is non-rigidly oriented with respect to gravity in two dimensions by pendulum ring 69 as a result of the coupling provided by coil spring 70.

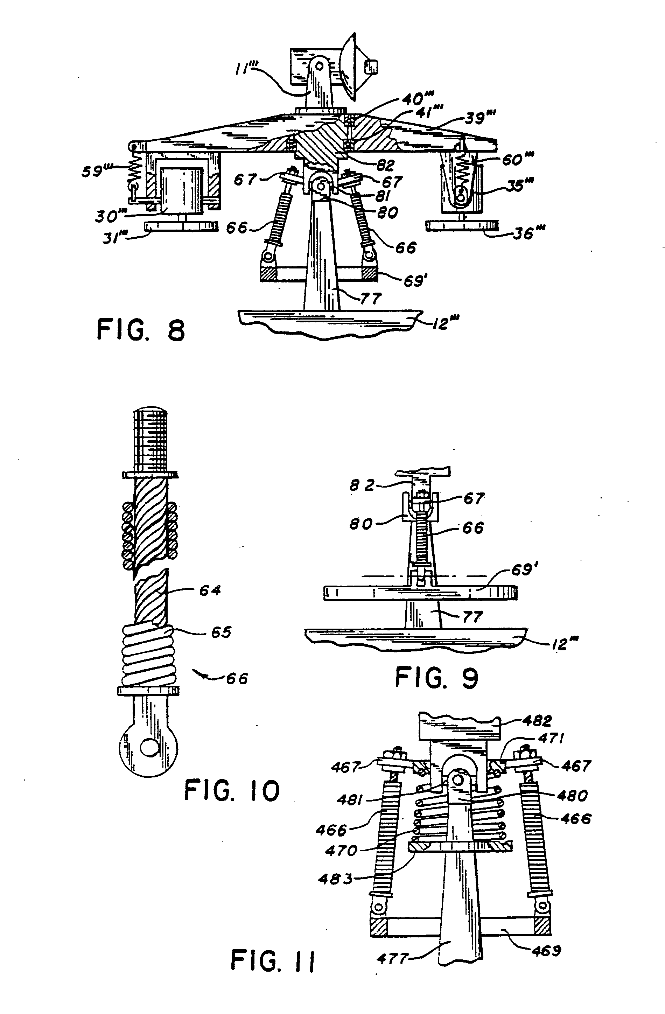

In Figure 8 an embodiment of this invention is shown wherein the stabilized system is constructed as one integrated assembly. In the Figure post 77 mounted on support structure 12″ carries a universal joint consisting of lower yoke 80, upper yoke 82, and hidden internal cross 81. Yokes 80 and 82 pivot on the right-angled spindles of cross 81 so as to comprise a gimbal assembly.

The upper extension of yoke 82 constitutes a stable platform on which operating equipment 11‴ is mounted. The upper extension of yoke 82 also supports azimuth bearings 40‴ and 41‴ which in turn rotationally support gyro frame 39‴. The entire assembly comprised of upper yoke 82, operating equipment 11‴, and gyro frame 39‴ including all components attached thereto, is statically balanced about the two orthogonal axes of internal cross 81. Gyro frame 39‴ is provided with two gyro assemblies comparable to those shown in Figures 1 and 6.

Cable clips 67, attached at diametrically opposite positions on upper yoke 82, rigidly support pendulum cables 66 at their upper ends. At their lower ends pendulum cables 66 are pivotally connected to clips on pendulum ring 69′ in the plane of Figure 8, but are rigidly connected to pendulum ring 69′ in the plane shown in Figure 9. Thus the steady-state, or average, orientation of pendulum ring 69′ is imparted symmetrically and with equal coupling stiffness in two orthogonal planes to upper yoke 82.

Referring now to Figure 10, pendulum cable 66 is shown to be comprised of an inner flexible core 64, such as a multi-strand steel cable, and an outer cover consisting of a closely wound coil spring case 65. The annular space between core 64 and case 65 is filled with a viscous medium, such as a petroleum grease. Relative motion between core 64 and case 65 which occurs whenever pendulum cable 66 flexes creates shearing displacements throughout the viscous medium which thereby absorb a portion of the energy causing cable flexure in the first place.

In Figure 11 an embodiment of this invention is shown wherein the reference orienting effect of pendulum ring 469 is complimented and modified by the reference orienting effect of coil spring 470. Grooved ring 483, which is rigidly attached to support post 477, supports coil spring 470 at its lower end while the upper end of coil spring 470 rests in a groove in ring 470 which itself is attached to upper yoke 482. Coil spring 470 may be constructed so as to possess pre-selected non-linear stiffness-versus-deflection characteristics. The advantages of such construction are discussed below.

Description of Operation

In operation, gyro motors 30 and 35 drive their respective rotors 31 and 36 in opposite directions at some nominal design speed, typically in the range of 600 to 6,000 rpm. The two motors need not operate at the same speed. In the absence of any disturbance the system will find and maintain the orientations indicated in Figure 1. Note however that gyro azimuth frame 39 is essentially unrestrained in azimuth and hence is free to take any azimuth orientation. For the sake of illustration that gyro frame 39 initially is in the position shown in Figures 1 and 3.

Now suppose structure 12 oscillates about an axis parallel to the axis of trunnion 15 as would be caused by a ship's rolling motion. Lower gimbal ring 42 and upper gimbal ring 19 will tend to remain in their original orientations as a consequence of their mass moment of inertia. Any accelerations which accompany the oscillations of support structure 12 or any other extraneous accelerations which may occur will have no effect on the statically balanced portions of the system, which is the entire system except for the reference orienting pendulum, because they are compositely statically balanced about all motion axes. However, varying torques tending to disturb lower gimbal ring 42 orientation will be induced by springs 52 and 53 whenever pendulum 62 has been deflected by horizontal accelerations. These disturbing torques, acting over finite periods of time, become torsional impulses which tend to reorient lower gimbal ring 42 about spindles 45 and 46. Some re-orientation is resisted, however, by the process of gyro precession; gyro motor with rotor 31 absorbs the imposed torsional impulses by undergoing angular momentum changes, specifically by changing its spin axis orientation about spindle 32. The speed of motor 30 with rotor 31 is essentially unaffected. Gyro motor 30 will be gently urged back toward its initial center position during and after any precession motion by spring 33 acting on eccentric extension 33 of spindle 32.

When oscillations of support structure 12 occur in the orthogonal direction to that described above, comparable to a ship's pitching motion, the same effects will occur but the disturbing torques will be induced by the orthogonal counterparts to springs 52 and 53 and pendulum 62, and the resisting torques will be generated by gyro motor 35 with rotor 36 by its precessing about pivot spindles 37. Motion of support structure 12 simultaneously in both directions, corresponding to a ship experiencing both roll and pitch motions, will result in the simultaneous occurrence of both of the consequential effects described above.

When support structure 12 rotates about a vertical axis, comparable to a ship's turning motion in azimuth, gyro azimuth frame 39 will tend to remain static in its initial position as a consequence of its mass moment of inertia. If support structure 12 now rolls as this new azimuth position any disturbing torsional impulses induced by springs 52 and 53 from pendulum 62 will be resisted by precession motions of both gyro motor with rotor 31 and gyro motor 35 with rotor 36 as each assembly reacts to its components of the disturbing torsional impulses.

If operating equipment 11 is rotated in azimuth on platform structure 10 no disturbing torques will be induced in the system because any torques accompanying such motion will be reacted by spindles 22 and 23, and thence to spindles 15 and 16, to trunnions 17 and 18.

If the system's annular momentum change capacity is exceeded, such as can occur if support structure 12 rotates beyond the platform's angular operating range, one or both of the gyro motors 30 and 35 will rapidly drive itself to a precession angular motion limit position and the system will thereupon become completely unstable. The system will immediately begin to erect itself however, and within one or two minutes after the operating angular motion limit was last exceeded the system will become essentially stable again. This graceful re-stabilization characteristic of the present invention is markedly different from the re-stabilization behavior of rigidly pendulous mechanically stabilized systems which, after once having been tumbled will continue to be destabilized until, by fortuitous circumstances, the angular motion limits and the integrated disturbing impulse correcting capacity of the gyros are not exceeded over one complete oscillating cycle of the ship. The aforesaid fortuitous circumstances typically will occur for rigidly pendulous systems within ten to one hundred oscillating cycles of support structure 12, depending on how closely the total motion amplitude of support structure 12 approaches the useful operating range of the stabilized platform system.

The embodiment shown in Figure 4 does not have immunity to azimuth motions of the support structure as is provided by the embodiment shown in Figure 1. This embodiment is therefore most useful in those applications which have negligibly small motions about one axis, e.g. pitch, and which also experience only slow yaw/turning rates. This situation exists for very large crude oil carrying ships.

In the embodiment illustrated in Figures 1, 4, 6, and 8 it will be noted that horizontal accelerations caused by ship rolling and pitching motions, and which cause the reference orienting pendulum 62, 62', 69 or 69' respectively to be non-vertical, will tend to mis-orient the stabilized portions of the system in a direction which is opposite to the motion itself. For example, in a rolling motion of a ship to the right from vertical the pendulum will tend to create an error toward the left in stablized platform orientation. It will be noted further that coil spring 470 in Figure 11 will tend to mis-orient the stabilized platform in the same direction as ship motion; in a rolling motion to the right from vertical the coil spring will tend to create an error also to the right in stabilized platform orientation. These opposite effects are combined in the embodiment shown in Figure 11 to minimize the mid-orienting effects of either the pendulum, or the spring-to-support post reference orienting means taken by itself.

It also will be noted that horizontal accelerations acting on the auxiliary pendulum 469 in Figure 11 can be represented by trigonometric expressions, as proposed in US—A—1,083,370 — Luyken, for example. Further, approximations to such trigonometric expressions, but of the opposite sense, can be obtained for the force versus deflection relationship of coil spring 470 by winding it, for example, to have both taper and nonuniform coil spacing. Thus, the embodiment shown in Figure 11 allows significant reductions in the error causing effects of the reference orienting pendulum under operating conditions involving appreciable ship motions having attendant appreciable horizontal accelerations.

Although the embodiments of this invention shown in the Figures and described herein indicate the use of one or two gyros with their spin axes oriented to be nominally vertical, it should be understood that other gyro arrangements are equally applicable. Among such permissible alternative arrangements is a four-gyro array generally in a form as described in US—A—1,236,993 — Sperry or US—A—1,083,370 — Luyken, the horizontal spin axis arrangements described in US—A—1,645,079 —Titterington or US—A—1,573,028 — Bates and over/under arrangement suggested in US—A—1,324,477 — Tanner. Also, an end-to-end arrangement generally as described in US—A—3,742,770 — Flannelly can be substituted for the gyro arrangements depicted above. All such alternative arrangements would, of course, in accordance with my invention, be statically balanced and non-rigidly coupled to an auxiliary reference orienting pendulum as described above.

Further a stabilized platform system according to this invention may include a statically balanced, integral-type unit in which the gyro azimuth frame 39 is rigidly attached to lower gimbal ring 42 rather than mounted on its own azimuth bearings 40 and 41.

The addition of damping means, caging means, or power transmission means such as slip rings or rotary air gap transformer would not change the basic character of the stabilized platform system.

## Claims

1. A mechanically stabilized platform system for mounting on a supporting structure (12), including a gyroscopically controlled stabilizing assembly (14) which is pendulous, so as to orient the platform system to the vertical, characterised in that a pendulum (62) is suspended from the supporting structure (12) for gravitational movement independent of the position of the supporting structure and the stabilizing assembly and in that the pendulum (62) is connected by a non-rigid coupling (52, 53) to the stabilizing assembly (14) which includes a least one gyro assembly (30, 35) and is mounted on the supporting structure.

2. A system as claimed in Claim 1, wherein the stabilizing assembly (14) is mounted on the supporting structure (12) by a gimbal which includes a gimbal ring (42), the non-rigid coupling comprises springs (52, 53) which connect the pendulum (62) to the gimbal ring (42), a gyro azimuth frame (39) is rotatably mounted on the gimbal ring (42) for rotation in a plane parallel to the intersecting axes (44, 45; 56, 57) of the gimbal, and pair of gyro assemblies (30, 35) are pivotally mounted on the azimuth frame (39).

3. A system as claimed in Claim 1, wherein the stabilizing structure (14″) is mounted on the supporting structure (46″, 47″) by a gimbal ring (42″), the pendulum is a pendulum ring (69) which is suspended from the supporting structure (46″, 47″) by a gimbal (63″, 72, 73, 75) which includes an outer gimbal ring (72), the non-rigid coupling is a coil spring (70) which extends between the gimbal rings (42″, 72), a gyro azimuth frame (39″) is rotatably mounted on the first-mentioned gimbal ring (42″) for rotation in a plane parallel to the intersecting axes of the first-mentioned gimbal, and a pair of gyro assemblies (30, 35) are pivotally mounted on the azimuth frame (39″).

4. A system as claimed in Claim 2, wherein the platform (10) is pivotally mounted (15 to 23) on the supporting structure (12), and is connected to the stabilizing assembly (14) by psuh rods (28, 29) which connect the gimbal ring (42) to the platform (10).

5. A system as claimed in Claim 4, wherein the platform (10) is mounted about a pair of orthogonal intersecting axes (15, 16; 22, 23) which are parallel to and spaced from the corresponding pair of orthogonal intersecting axes (44, 45; 56, 57) of the gimbal (42, 43), and the push-rods (28, 29) are connected so that the platform (10) always has the same orientation as the stabilizing assembly (14).

6. A system as claimed in Claim 1, wherein the stabilizing structure (14′) comprises a gimbal ring (42′) which is mounted on the supporting structure (12′) by spindles (44′, 45′), the non-rigid coupling comprises springs (53′) which connect the pendulum (62′) to the gimbal ring (42′), and a gyro assembly (35′, 36′) is mounted on support spindles (22′, 23′) within the gimbal ring (42′).

7. A system as claimed in Claim 6, wherein the platform (10′) is mounted on a single pivot axis (15′) which is parallel to the axis of the gimbal spindles (44′, 45′), and the gimbal ring (42′) is connected to the platform (10′) by a push rod (28′) which couples rotation of the platform (10′) and the gimbal ring (42′) about those parallel axes, relative to the supporting structure.

8. A mechanically stabilized platform system for mounting on a support structure (12‴) in which an equipment (11‴) to be stabilized is connected to a gyroscopically controlled stabilizing assembly which is pendulous so as to orient the equipment to the vertical, characterised by a universal joint (80, 81) which mounts a bearing member (82) of the stabilizing assembly on the supporting structure (12‴, 77), a pendulum ring (69′) which is suspended from the stabilizing assembly by an elastic suspension (66), a gyro azimuth frame (39‴) which is supported by azimuth bearings (40‴, 41‴) on the bearing member (82), and a pair of gyro assemblies (30‴, 35‴) which are pivotally mounted on the azimuth frame (39‴).

9. A system as claimed in Claim 8, wherein the elastic suspension comprises pendulum cables (66) each having an inner flexible core (64) and a coil spring case (65), with a viscous medium in the space between the core (64) and the case (65) to act as energy absorbing means.

10. A system as claimed in Claim 9, wherein the inner flexible core (64) is a multi-strand steel cable, and the viscous medium is a grease which fills the annular space between the core (64) and the coil spring case (65).

11. A system as claimed in Claim 9 or Claim 10, wherein the elastic suspension comprises two of the pendulum cables (66) which are connected to the pendulum ring (69′) by pivots which permit pivoting in one plane only.

12. A system as claimed in any one of Claims 8 to 11, including resilient means (470) extending between the bearing member (82) and the supporting structure (483) for orienting the stabilizing assembly relative to the supporting structure.

13. A system as claimed in any one of Claims 1 to 12, wherein the natural period of oscillation of the combination of the pendulum and the resilient member or members is in the range 0.25 to 4.0 seconds.

14. A system as claimed in any one of Claims 1 to 13, wherein the system is statically balanced.

15. A mechanically stabilized platform system for mounting a platform (10) on an unstable supporting structure (12), the platform (10) being connected to a gyroscopically controlled stabilizing assembly (14) which is oriented with respect to gravity, characterised by a gyroscopic torsional impulse absorption system (30, 35, 39) which is rotatably mounted on an azimuth (40, 41) 42) to which a gravity reference is transferred, for free azimuth rotation relative to and independently of the platform (10) and of the supporting structure (12), whereby the platform (10) has immunity from azimuth motions of the supporting structure (12).

16. A system as claimed in Claim 15, wherein the platform (10) is pivotally mounted on the supporting structure, and the connections (28, 29) between the platform and the azimuth bearings (40, 41, 42) are arranged so that the platform (10) always has the same orientation as the gyroscopic torsional impulse absorption system (30, 35, 39).

17. A system as claimed in Claim 15 or Claim 16, wherein the gyroscopic torsional impulse absorption system means comprises two gyro assemblies (30, 35) which are pivotally mounted on an azimuth frame (39) which is rotatable on a gimbal bearing ring (42) about an axis which is at right angles to a pivotal axis (44, 45) of the gimbal bearing ring (42) on the supporting structure (12).

## Patentansprüche

1. Mechanisch stabilisiertes Plattform-System zur Anbringung auf einer Trägerstruktur (12) mit einer kreiselgesteuerten Stabilisierungsanordnung (14), die pendelnd ist, so daß das Plattform-System vertikal ausgerichtet wird, dadurch gekennzeichnet, daß ein Pendel (62) an der Trägerstruktur (12) zur Ausführung einer Schwerkraftbewegung unabhängig von der Lage der Trägerstruktur und der Stabilisierungsanordnung aufgehängt ist und daß das Pendel (62) durch eine nichtstarre Kupplung (52, 53) mit der Stabilisierungsanordnung (14) verbunden ist, die wenigstens eine Kreiselanordnung (30, 35) enthält und an der Trägerstruktur befestigt ist.

2. System nach Anspruch 1, worin die Stabilisierungsanordnung (14) an der Trägerstruktur (12) durch eine Kardanaufhängung befestigt ist, die einen Kardanring (42) enthält, wobei die nichtstarre Kupplung Federn (52, 53) umfaßt, die das Pendel (62) mit dem Kardanring (42) verbinden, ein Kreisel-Azimutrahmen (39) zur Ausführung einer Drehung in einer Ebene parallel zu den sich schneidenden Achsen (44, 45; 56, 57) der Kardanaufhängung drehbar am Kardenring (42) gelagert ist und ein Paar von Kreiselanordnungen (30, 35) am Azimutrahmen (39) schwenkbar angebracht ist.

3. System nach Anspruch 1, worin die Stabilisierungsanordnung (14'') durch einen Kardanring (42'') an der Trägerstruktur (46'', 47'') befestigt ist, das Pendel ein Pendelring (69) ist, der an der Trägerstruktur (46'', 47'') durch eine Kardanaufhängung (63'', 72, 73, 75) aufgehängt ist, die einen äußeren Kardanring (72) aufweist, die nicht-starre Kupplung eine Schraubenfeder (70) ist, die sich zwischen den Kardenringen (42'', 72) erstreckt, ein Kreisel-Azimutrahmen (39'') am erstgenannten Kardanring (42'') zur Ausführung einer Drehung in einer Ebene parallel zu den sich schneidenden Achsen der erstgenannten Kardanaufhängung drehbar gelagert ist und ein Paar von Kreiselanordnungen (30, 35) am Azimutrahmen (39'') schwenkbar gelagert ist.

4. System nach Anspruch 2, worin die Plattform (10) an der Trägerstruktur (12) schwenkbar gelagert (15 bis 23) und mit der Stabilisierungsanordnung (14) durch Schubstangen (28, 29) verbunden ist, die den Kardanring (42) mit der Plattform (10) verbinden.

5. System nach Anspruch 4, worin die Plattform (10) um ein Paar von sich rechtwinklig schneidenden Achsen (15, 16; 22, 23) gelagert ist, die parallel zu und im Abstand von dem entsprechenden Paar von sich rechtwinklig schneidenden Achsen (44, 45; 56, 57) der Kardanaufhängung (42, 43) angeordnet sind, und die Schubstangen (28, 29) derart verbunden sind, daß die Plattform (10) immer die gleiche Ausrichtung hat wie die Stabilisierungsanordnung (14).

6. System nach Anspruch 1, worin die Stabilisierungsanordnung (14') einen Kardanring (42') aufweist, der an der Trägerstruktur (12') durch Spindeln (44', 45') gelagert ist, die nichtstarre Kupplung Federn (53') aufweist, die das Pendel (62') mit dem Kardanring (42') verbinden, und eine Kreiselanordnung (35', 36') auf Trägerspindeln (22', 23') innerhalb des Kardanrings (42') gelagert ist.

7. System nach Anspruch 6, worin die Plattform (10') auf einer einzigen Schwenkachse (15') gelagert ist, die parallel zur Achse der Kardanspindeln (44', 45') angeordnet ist, und der Kardanring (42') mit der Plattform (10') durch eine Schubstange (28') verbunden ist, die die Drehung der Plattform (10') und des Kardanrings (42') um diese parallelen Achsen in Bezug auf die Trägerstruktur kuppelt.

8. Mechanisch stabilisiertes Plattformsystem zur Lagerung auf einer Trägerstruktur (12'''), in der eine zu stabilisierende Anordnung (11'''') mit einer kreiselgesteuerten Stabilisierungsanordnung verbunden ist, die pendelnd ausgebildet ist, so daß die Anordnung mit der Vertikalen ausgerichtet wird, gekennzeichnet durch ein Universalgelenk (80, 81), das einen Lagerteil (82) der Stabilisierungsanordnung an der Trägerstruktur (12''', 77) lagert, einen Pendelring (69'), der an der Stabilisierungsanordnung durch eine elastische Aufhängung (66) aufgehängt ist, einen Kreisel-Azimutrahmen (39'''), der durch Azimutlager (40''', 41''') am Lagerteil (82) abgestützt ist, und durch ein Paar von Kreiselanordnungen (30''', 35'''), die am Azimutrahmen (39''') schwenkbar gelagert sind.

9. System nach Anspruch 8, worin die elastische Aufhängung Pendelkabel (66) aufweist, deren jedes einen inneren flexiblen Kern (64) und ein Schraubenfedergehäuse (65) aufweist, wobei ein viskoses Medium im Zwischenraum zwischen dem Kern (64) und dem Gehäuse (65) vorgesehen ist, das als Mittel zur Energieabsorbierung dient.

10. System nach Anspruch 9, worin der inneren flexible Kern (64) eine mehrlitziges Stahlkabel ist und das viskose Medium ein Fett ist, das den Ringraum zwischen dem Kern (64) und dem Schraubenfedergehäuse (65) ausfüllt.

11. System nach Anspruch 9 oder 10, worin die elastische Aufhängung zwei Pendelkabel (66) aufweist, die mit dem Pendelring (69'') durch Schwenkgelenke verbunden sind, die nur eine Verschwenkung in einer Ebene zulassen.

12. System nach einem der Ansprüche 8 bis 11, mit einer elastischen Einrichtung (470), die sich zwischen dem Lagerteil (82) und der Trägerstruktur (483) erstreckt, um die Stabilisierungsanordnung bezüglich der Trägerstruktur auszurichten.

13. System nach einem der Ansprüche 1 bis 12, worin die Eigenschwingungsperiode der Kombination auf Pendel und elastischen Teil oder elastischen Teilen im Bereich von 0,25 bis 4,5 s liegt.

14. System nach einem der Ansprüche 1 bis 13, worin das System statisch ausgeglichen ist.

15. Mechanisch stabilisiertes Plattform-System zur Lagerung einer Plattform (10) auf einer unstabilen Trägerstruktur (12), wobei die Plattform (10) mit einer kreiselgesteuerten Stabilisierungsanordnung (14) verbunden ist, gekennzeichnet durch ein Kreisel-Torsionsimpuls-Absorptionssystem (30, 35, 39), das auf einem Azimutlager (40, 41, 42) drehbar gelagert ist, auf das eine Schwerkraftbezugsgröße übertragen wird, so daß eine freie Azimutdrehung in Bezug auf und unabhängig von der Plattform (10) und der Trägerstruktur (12) möglich ist, wodurch die Plattform (10) gegen Azimutbewegungen der Trägerstruktur (12) umempfindlich ist.

16. System nach Anspruch 15, worin die Plattform (10) an der Trägerstruktur schwenkbar gelagert und die Verbindungen (28, 29) zwischen der Plattform und dem Azimutlager (40, 41, 42) so angeordnet und ausgebildet sind, daß die Plattform (10) stets die gleiche Ausrichtung wie das Kreisel-Torsionsimpuls-Absorptionssystem (30, 35, 39) aufweist.

17. System nach Anspruch 15 oder 16, worin das Kreisel-Torsionsimpuls-Absorptionssystem zwei Kreiselanordnungen (30, 35) umfaßt, die an einem Azimutrahmen (39) schwenkbar gelagert sind, der auf einem Kardanlagerring (42) um eine Achse drehbar gelagert ist, die rechtwinklig zu einer Schwenkachse (44, 45) des Kardanlagerrings (42) an der Trägerstruktur (12) gelagert ist.

## Revendications

1. Système de plate-forme stabilisé mécaniquement destiné à être monté sur une structure (12) de support, comprenant un ensemble stabilisateur (14) à commande gyroscopique qui est pendulaire afin d'orienter le système de plateforme sur la verticale, caractérisé en ce qu'un pendule (62) est suspendu à la structure (12) de support afin de se déplacer sous l'effet de la gravité indépendamment de la position de la structure de support et de l'ensemble de stabilisation et en ce que le pendule (62) est relié par un accouplement non rigide (52, 53) à l'ensemble (14) de stabilisation qui comprend au moins un ensemble gyroscopique (30, 35) et qui est monté sur la structure de support.

2. Système selon la revendication 1, dans lequel l'ensemble (14) de stabilisation est monté sur la structure (12) de support au moyen d'une suspension à la cardan qui comprend un cercle de suspension (42), l'accouplement non rigide comprend des ressorts (52, 53) qui relient le pendule (62) au cercle (42) de suspension, un bâti d'azimuth gyroscopique (39) est monté de façon à pouvoir tourner sur le cercle de suspension (42) afin de tourner dans un plan parallèle aux axes sécants (44, 45; 56, 57) de la suspension à la cardan, et deux ensemble gyroscopiques (30, 35) sont montés de façon à pouvoir pivoter sur le bâti d'azimuth (39).

3. Système selon la revendication 1, dans lequel la structure de stabilisation (14'') est montée sur la structure de support (46'', 47'') au moyen d'un cercle de suspension (42''), le pendule st un pendule annulaire (69) qui est suspendu à la structure de support (46'', 47'') par une suspension à la cardan (63'', 72, 73, 75) qui comprend un cercle extérieur (72) de suspension, l'accouplement non rigide est un ressort hélicoïdal (70) qui s'étend entre les cercles de suspension (42'', 72), un bâti d'azimuth gyroscopique (39'') est monté de façon à pouvoir tourner sur le premier cercle de suspension cité (42'') afin de tourner dans un plan parallèle aux axes sécants de la première suspension à la cardan citée et deux ensembles gyroscopiques (30, 35) sont montés de façon pivotante sur le bâti d'azimuth (39'').

4. Système selon la revendication 2, dans lequel la plate-forme (10) est monté de façon pivotante (15 à 23) sur la structure de support (12) et est reliée à l'ensemble de stabilisation (14) par des barres de poussée (28, 29) qui relient le cercle de suspension (42) à la plate-forme (10).

5. Système selon la revendication 4, dans lequel la plate-forme (10) est montée sur deux axes sécants orthogonaux (15, 16; 22, 23) qui sont parallèles à et espacés de la paire correspondante d'axes sécants orthogonaux (44, 45; 56, 57) de suspension à la cardan (42, 43) et les barres de poussée (28, 29) sont reliées de façon que la plate-forme (10) ait toujours la même rotation que l'ensemble de stabilisation (14).

6. Système selon la revendication 1, dans lequel la structure (14') de stabilisation comprend un cercle de suspension (42') qui est monté sur la structure (12') de support au moyen de broches (44', 45'), l'accouplement non rigide comprend des ressorts (53') qui relient le pendule (62') au cercle de suspension (42'), et un ensemble gyroscopique (35', 36') est monté sur les broches de support (22', 23') à l'intérieur du cercle de suspension (42').

7. Système selon la revendication 6, dans lequel la plate-forme (10') est montée sur un seul axe (15') de pivotement qui est parallèle à l'axe des broches (44', 45') de suspension, et le cercle de suspension (42') est relié à la plate-forme (10') par une barre (28') de poussée qui accouple la rotation de la plate-forme (10') et du cercle (42') de suspension autour de ces axes parallèles, par rapport à la structure de support.

8. Système de plate-forme stabilisé mécaniquement, destiné à être monté sur une structure (12''') de support, dans lequel un équipement (11''') à stabiliser est rélie à un ensemble de stabilisation à commande gyroscopique qui est pendulaire afin d'orienter l'équipement sur la verticale, caractérisé par un joint universel (80, 81) qui porte un élément de palier (82) de l'ensemble de stabilisation sur la structure de support (12''', 77), un pendule annulaire (69') qui est suspendu à l'ensemble de stabilisation par une suspension élastique (66), un bâti d'azimuth gyroscopique (39'''') qui respose sur l'élément de palier (82) au moyen de paliers d'azimuth (40''', 41'''), et deux ensembles gyroscopiques (30''', 35''') qui sont montés de façon pivotante sur le bâti d'azimuth (39''').

9. Système selon la revendication 8, dans lequel la suspension élastique comprend des câbles (66) de pendule ayant chacun une âme intérieure flexible (64) et une gaine (65) à ressort helicoïdal, un milieu visqueux, situé dans l'espace entre l'âme (64) et la gaine (65), étant destiné à assumer la fonction de moyen d'absorption d'énergie.

10. Système selon la revendication 9, dans lequel l'âme flexible intérieure (64) est un câble d'acier à brins multiples, et le milieu visqueux est une graisse qui remplit l'espace annulaire compris entre l'âme (64) et la gaine (65) à ressort hélicoïdal.

11. Système selon la revendication 9 ou la revendication 10, dans lequel la suspension élastique comprend deux des câbles de pendule (66) qui sont reliés au pendule annulaire (69') par des pivots qui permettent un pivotement dans un seul plan.

12. Système selon l'une quelconque des revendications 8 à 11, comprenant des moyens élastiques (470) s'étendant entre l'élément de palier (82) et la structure de support (483) afin d'orienter l'ensemble de stabilisation par rapport à la structure de support.

13. Système selon l'une quelconque des revendications 1 à 12, dans lequel la période propre d'oscillation de l'ensemble du pendule et de l'élément ou des éléments élastiques est dans l'intervalle de 0,25 de 4,0 secondes.

14. Système selon l'une quelconque des revendications 1 à 13, dans lequel le système est équilibré statiquement.

15. Système de plate-forme stabilisé mécaniquement pour le montage d'une plate-forme (10) sur une structure instable (12) de support, la plate-forme (10) étant reliée à un ensemble de stabilisation (14) à commande gyroscopique qui est orienté par rapport à la gravité, caractérisé par un systéme gyroscopique d'absorption d'impulsions par torsion (30, 35, 39) qui est monté de façon à pouvoir tourner sur un palier d'azimuth (40, 41, 42) auquel une référence de gravité est transmise afin de pouvoir tourner librement en azimuth par rapport à et indépendamment de la plate-forme (10) et de la structure de support (12), de façon que la plate-forme (10) soit insensible au mouvement en azimuth de la structure (12) de support.

16. Système selon la revendication 15, dans lequel la plate-forme (10) est montée de façon à pivoter sur la structure de support, et les liaison (28, 29) entre la plate-forme et le palier d'azimuth (40, 41, 42) sont agencées de façon que la plate-forme (10) ait toujours la même orientation que le système gyroscopique d'absorption d'impulsions par torsion (30, 35, 39).

17. Système selon la revendication 15 ou la revendication 16, dans lequel le système gyroscopique d'absorption d'impulsions par torsion comprend deux ensembles gyroscopiques (30, 35) qui sont montés de façon pivotante sur un bâti d'azimuth (39) qui peut tourner sur un cercle de palier de suspension (42) autour d'un axe qui est perpendiculaire à un axe de pivotement (44, 45) du cercle de palier de suspension (42) sur la structure (12) de support.

FIG. 1

FIG. 2

FIG. 3

1

FIG. 4

FIG. 5

FIG. 6

FIG. 7

2

FIG. 8

FIG. 10

FIG. 9

FIG. 11